Europäisches Patentamt

European Patent Office

Office européen des brevets

(11) Veröffentlichungsnummer: **0 357 801**
**A1**

(12) **EUROPÄISCHE PATENTANMELDUNG**
veröffentlicht nach Art. 158 Abs. 3
EPÜ

(21) Anmeldenummer: 89903492.0

(22) Anmeldetag: 03.02.89

(86) Internationale Anmeldenummer:
PCT/SU89/00034

(87) Internationale Veröffentlichungsnummer:
WO 89/08032 (08.09.89 89/21)

(51) Int. Cl.⁵: **B60H 3/00**

(30) Priorität: 04.03.88 SU 4387009
23.11.88 SU 4604865

(43) Veröffentlichungstag der Anmeldung:
14.03.90 Patentblatt 90/11

(84) Benannte Vertragsstaaten:
BE DE FR GB IT SE

(71) Anmelder: ZAPOROZHSKY AVTOMOBILNY
ZAVOD 'KOMMUNAR' (PROIZVODSTVENNOE
OBIEDINENIE 'AVTOZAZ')
pr. Lenina 8
Zaporozhie, 330600(SU)

(72) Erfinder: AVERIN, Gennady Vasilievich
ul. Chumachenko, 38-100
Zaporozhie, 330104(SU)

(74) Vertreter: Füchsle, Klaus, Dipl.-Ing. et al
Hoffmann . Eitle & Partner Patentanwälte
Arabellastrasse 4
D-8000 München 81(DE)

(54) **KLIMAGERÄT EINES FAHRZEUGES.**

(57) Das Klimagerät eines Fahrzeuges enthält ein Gehäuse (1), in dem ein Verdampfer (2) und ein Erhitzer (3) untergebracht sind, die mit einem Verdichter bzw. dem Motorkühlsystem verbunden sind, sowie einen Ventilator (7) und steuerbare Klappen (9,13) der Luftleitungen (8,12) für Heissluft und gekühlte Luft. Der Verdampfer (2) und der Erhitzer (3) sind als Paket von sich abwechselnden und Durchgangskanäle (4,5) für einen Wärmeträger aufweisenden Wärmeaustauschplatten ausgebildet. Zwischen dem Ventilator (7) und dem Paket der Wärmeaustauschplatten befindet sich eine zusätzliche steuerbare Klappe (14) der Heissluftleitung (8), die zwischen zwei Stellungen bewegbar ist, in deren erster sie einen Teil der Oberfläche des Pakets der Wärmeaustauschplatten überdeckt und in deren zweiter Stellung sie die gesamte Oberfläche des Pakets der Wärmeaustauschplatten freigibt.

Die vorliegende Erfindung kann in selbstfanrenden Transportmitteln verwendet werden.

FIG. 2

FIG. 3

# KLIMAGERÄT EINES FAHRZEUGES

## Technisches Gebiet

Die Erfindung bezieht sich auf den Transportmaschinenbau und betrifft insbesondere ein Klimagerät eines Fahrzeuges.

Das wirkungsvollste Anwendungsgebiet der vorliegenden Erfindung sind selbstfahrende Transportmittel, die ein Flüssigkeitskühlsystem des Motors haben, beispielsweise Kraftwagen, Strassenbaumaschinen, die Landtechnik.

Die Erfindung eignet sich ausserdem für den Einsatz in verschiedenen stationären Anlagen.

## Zugrundeliegender Stand der Technik

Es ist die Ausführung eines Klimagerätes (US,A, 3670808) bekannt, das die Lüftung, Kühlung und Vorwärmung der Luft in der Fahrerkabine (im Fahrgastraum) ermöglicht. Das Klimagerät besteht aus einem Gehäuse, unterteilt durch eine Innenwand in einen Kondensatorabschnitt und einen anderen Abschnitt, in dem in nacheinanderfolgender Anordnung ein Verdampfer und ein Erhitzer untergebracht sind, welche mit dem Verdichter einer Kältemaschine bzw. mit dem Kühlsystem des Motors verbunden sind. In jedem Abschnitt sind elektrische Ventilatoren vorhanden, die den erforderlichen Luftumlauf in Luftleitungen gewährleisten.

Das Klimagerät wird auf dem Dach des Fahrzeuges montiert, so dass es keine Begrenzungen in bezug auf seine Aussenabmessungen hat, aber eine derartige Anordnung verursacht einen zusätzlichen aerodynamischen Widerstand für das Fahrzeug, weshalb sich die Energiekennwerte verschlechtern und der Kraftstoffverbrauch wächst.

Andererseits erschwert die Warmluftzufuhr in die Fahrerkabine (in den Fahrgastraum) von oben her die günstige Verteilung der Luftströme, und zwar über den Unterteil der Fahrerkabine (des Fahrgastraumes), über die Windschutzscheibe und die Seitenscheiben und benötigt ein zusätzliches Luftleitungssystem und den Platz für dessen Unterbringung.

Es ist auch ein Klimagerat für Fahrzeuge (US,A, 4262738) bekannt, das in der Fahrerkabine (im Fahrgastraum) eines Fahrzeuges montiert wird. Das Klimagerät besteht aus einem Gehäuse mit einem Aufnahmeteil, der Öffnungen und eine steuerbare Klappe zur Entnahme von Aussenluft und/oder Umlaufluft aus der Fahrerkabine (dem Fahrgastraum) des Fahrzeuges enthält, einem Verdampfer und einem Erhitzer, die aufeinanderfolgend in einem Abstand zueinander in diesem Gehäuse untergebracht und mit dem Verdichter einer Kältemaschine bzw. mit dem Kühlsystem des Motors verbunden sind, einem elektrischen Ventilator, der über die erwähnten Wärmetauscher die Luft in die Fahrerkabine (in den Fahrgastraum) des Fahrzeuges fördert, steuerbaren Klappen, die in den Luftleitungen für Heissluft und gekühlte Luft eingebaut sind, darunter auch einer Klappe, die sich im Zwischenraum zwischen den Wärmetauschern befindet.

Das Klimagerät gestattet zwar die zweckmässige Verteilung der Luftströme, doch wegen seines grossen Aussenmasses in Axialrichtung (bedingt durch die nacheinanderfolgende Anordnung des Verdampfers, des Erhitzers und der Klappe zwischen ihnen) ist seine Montage im begrenzten Raum unter dem Armaturenbrett erschwert und seine Konstruktion viel zu kompliziert.

Der Erfindung liegt die Aufgabe zugrunde, durch Verwendung eines kombinierten Wärmetauschers, der eine wirkungsvolle Kühlung und Erwärmung des Luftmediums sicherstellt, ein Klimagerät in kompakter Bauweise für ein Fahrzeug zu schaffen.

Offenbarung der Erfindung

Die gestellte Aufgabe wird dadurch gelöst, dass in einem Klimagerät eines Fahrzeuges, enthaltend ein Gehäuse, in dem ein Verdampfer und ein Erhitzer untergebracht sind, die mit einem Verdichter bzw. dem Kühlsystem des Motors des Fahrzeuges verbunden sind, sowie einen Ventilator und in Luftleitungen für Heiss- und gekühlte Luft eingebaute steuerbare Klappen, erfindungsgemäss der Verdampfer und der Erhitzer als Paket von sich abwechselnden und Durchgangskanäle für einen Wärmeträger aufweisenden Wärmeaustauschplatten ausgebildet sind und der Ventilator vor dem Paket der Wärmeaustauschplatten längs des Luftstromes angeordnet ist, wobei zwischen dem Ventilator und dem Paket der Wärmeaustauschplatten eine zusätzliche steuerbare Klappe der Heissluftleitung angeordnet ist, die zwischen zwei Stellungen bewegbar ist, in deren erster sie einen Teil der Oberfläche des Pakets der Wärmeaustauschplatten überdeckt und mit dem überdeckten Teil des Pakets und dem Gehäuse einen mit der Heissluftleitung in Verbindung stehenden vorderen Hohlraum bildet und in deren zweiter Stellung sie unter Überdeckung der Heissluftleitung die gesamte Oberfläche des Pakets der Wärmeaustauschplatten freigibt, und hinter dem Paket der Wärmeaustauschplatten im Gehäuse ein hinterer Hohlraum vorhanden ist, der mit der Luftleitung für gekühlte Luft bei geöffneter Stellung ihrer Klappe und mit der Heissluftleitung bei geschlossener Stellung dieser Klappe in Verbindung steht.

Durch die Ausführung des Verdampfers und des Erhitzers als Paket der sich abwechselnden Wärmeaustauschplatten werden das axiale Aussenmass des Klimageräts und seine Masse vermindert und die Montagebedingungen verbessert.

Das erfindungsgemäss vorgeschlagene Klimagerät mit kombiniertem Wärmetauscher hat den Vorteil, dass zur Sicherstellung einer Wärmeentnahme, die der Wärmeentnahme von öhnlichen Verdampfer und Erhitzer bei deren separater Ausführung gleich gross ist, eine kleinere wärmeübertragende Oberfläche des kombinierten Wärmetauschers gefordert wird, denn die Wärmeaustauschplatten dienen füreinander als flächenvergrössernde Distanzstücke.

Überdies wird zur Spülung des kombinierten Wärmetauschers ein elektrischer Ventilator kleinerer Leistung benötigt als zur Spülung des Verdampfers und des Erhitzers in deren nacheinanderfolgender Anordnung erforderlich ist.

Der Energieverbrauch vermindert sich auch aufgrund der kleineren Masse des Klimageräts im ganzen.

Seinerseits gestattet das Vorhandensein einer zusätzlichen steuerbaren Klappe zwischen dem Ventilator und dem Paket der Wärmeaustauschplatten sowie die konstruktive Ausführung der Luftleitungen die Steuerung des im Wärmetauscher durchgehenden Luftstromes, und zwar dadurch, dass man ihn über einen Teil der wärmeübertragenden Oberfläche des Wärmetauschers leitet und dabei das Vorwärmen der Luft und deren nachfolgende 180°-Umkehr zwecks weiterer Erwärmung sicherstellt, was maximal behagliche Arbeitsbedingungen für den Menschen schaffen soll.

Die Verbindung des hinteren Hohlraumes im erfindungsgemässen Klimagerät mit dem vorderen Hohlraum erfolgt vorteilhafterweise durch zusätzliche Luftleitungen, die steuerbare Klappen aufweisen, die zwischen jeder der zusätzlichen Luftleitungen und dem hinteren Hohlraum angeordnet sind, wobei die zusätzlichen Luftleitungen mit der Heissluftleitung und der Spülluftleitung für die Windschutzscheibe stets verbunden sind.

Eine derartige Ausführung des Klimagerates erweitert die Möglichkeiten der Luftstromverteilung und verbessert somit den Komfort in der Fahrerkabine (im Fahrgastraum) des Fahrzeuges.

Beim Durchleiten des Luftstromes über die gesamte wärmeübertragende Oberfläche des Wärmetauschers sowohl im Kühlungsbetrieb als auch im Erwärmungsbetrieb ermöglicht das erfindungsgemässe Klimagerät die Luftzufuhr sowohl zum unteren, als auch zum oberen Teil der Fahrerkabine (des Fahrgastraumes), indem sich die Klappen öffnen, die das Innere der zusätzlichen Luftleitungen auf der Seite des hinteren Hohlraumes überdecken, und die Luft in die entsprechenden Luftleitungen strömt.

Beim Durchleiten des Luftstromes über einen Teil der Frontfläche des Wärmetauschers und bei dessen nachfolgender 180°-Umkehr zwecks weiterer Erwärmung dienen die zusätzlichen Luftleitungen dazu, die erwärmte Luft von unten nach oben zum Bespülen der Windschutzscheibe zu lenken.

Kurze Beschreibung der Zeichnungen

Weitere Ziele und Vorteile der vorliegenden Erfindung werden an Hand der nachfolgenden eingehenden Beschreibung ihrer Ausführungsbeispiele und der beigefügten Zeichnungen ersichtlich. In den Zeichnungen zeigt:

Fig. 1 die Gesamtansicht des erfindungsgemässen Klimagerätes;

Fig. 2 einen Schnitt nach Linie II - II der Fig. 1 (den Betriebszustand des Klimagerätes, wenn die zusätzliche steuerbare Klappe die Heissluftleitung uberdeckt);

Fig. 3 einen Schnitt nach Linie III - III der Fig. 2;

Fig. 4 einen Schnitt nach Linie IV - IV der Fig. 1 (den Betriebszustand des Klimagerates, wenn die zusätzliche steuerbare Klappe einen Teil der Oberfläche des Pakets der Wärmeaustauschplatten überdeckt);

Fig. 5 einen Schnitt nach Linie V - V der Fig. 2;

Fig. 6 einen Schnitt nach Linie VI - VI der Fig. 2;

Fig. 7 einen Schnitt nach Linie VII - VII der Fig. 2;

Fig. 8 eine Ausführungsform des Klimageräts.

Beste Ausführungsform der Erfindung

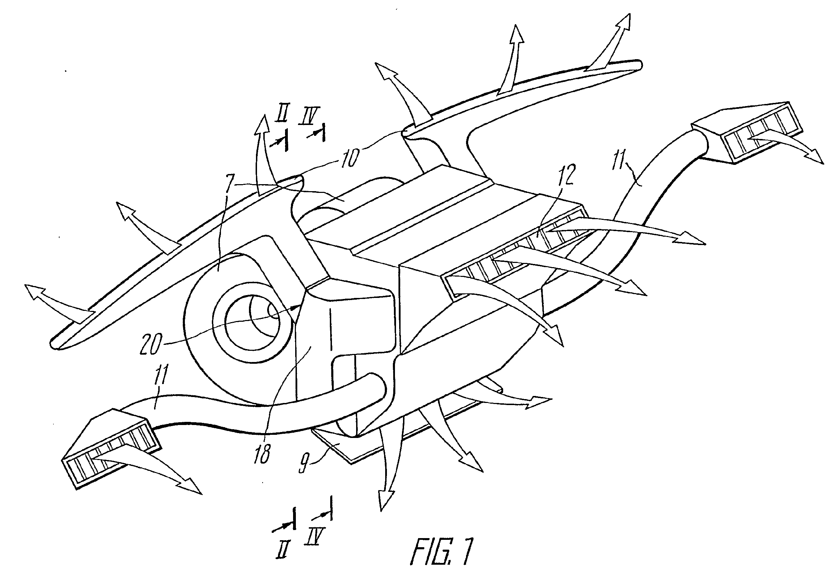

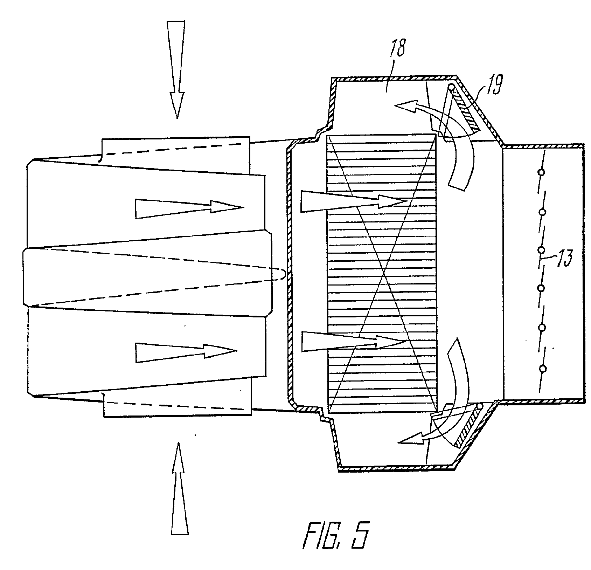

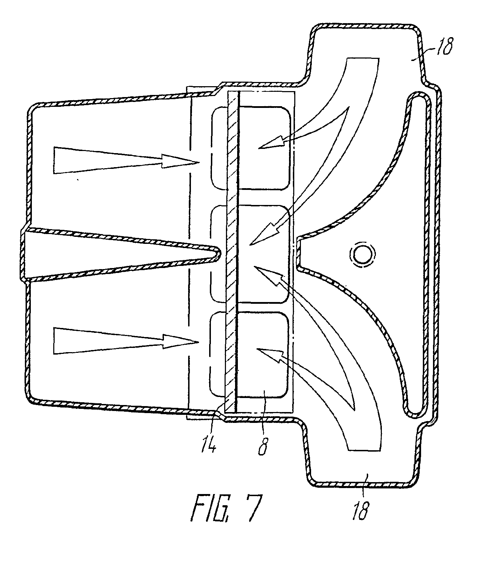

Das Klimagerät eines Fahrzeuges enthält ein Gehäuse 1 (Fig. 1 bis 8), in dem ein Paket von sich abwechselnden Wärmeaustauschplatten untergebracht ist, welche Platten jeweils Verdampfer 2 und Erhitzer 3 (Fig. 3) sind. Die Wärmeaustauschplatten des Verdampfers 2 sind in Form einer Rohrschlange aus einem flachen Mehrkanalrohr hergestellt, welche Rohrschlange mit dem Verdichter einer (nicht gezeigten)Kältemaschine verbunden ist, während die Platten des Erhitzers 3, die zwischen den Windungen der Rohrschlange angeordnet sind, mit dem Kühlsystem des (nicht gezeigten) Motors in Verbindung stehen.

In jeder der Wärmeaustauschplatten sind entsprechende Umlaufkanäle 4,5 für Wärmeträger (Kühlmittel und Motorkühlflüssigkeit) vorhanden. Die Wärmeaustauschplatten des Verdampfers 2 und des Erhitzers 3 sind mittels Einsatzstücke 6 mit entwickelter Oberfläche zusammengehalten.

Die Wärmeaustauschplatten wirken gegenseitig als Distanzstücke, wobei sie die Wärmeaustauschflächen des Verdampfers 2 und des Erhitzers 3 vergrössern.

Vor dem Paket der Wärmeaustauschplatten ist ein elektrischer Ventilator 7 in Richtung der Luftzufuhr angeordnet, der die Aussenluft und/oder die Umluftluft über das Paket der Wärmeaustauschplatten in eine Heissluftleitung 8 mit ihrer steuerbaren Klappe 9, in Spülluftleitungen 10 für die Windschutzscheibe, Spülluftleitungen 11 für die Seitenscheiben, sowie in eine Luftleitung 12 für gekühlte Luft mit einer Klappe 13 fördert.

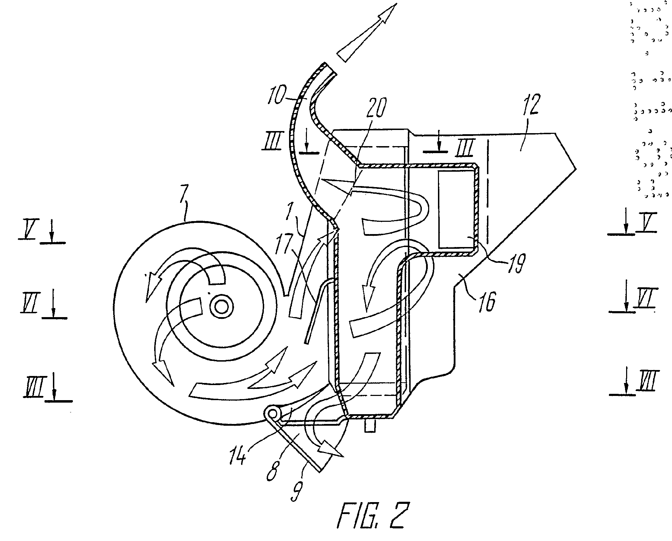

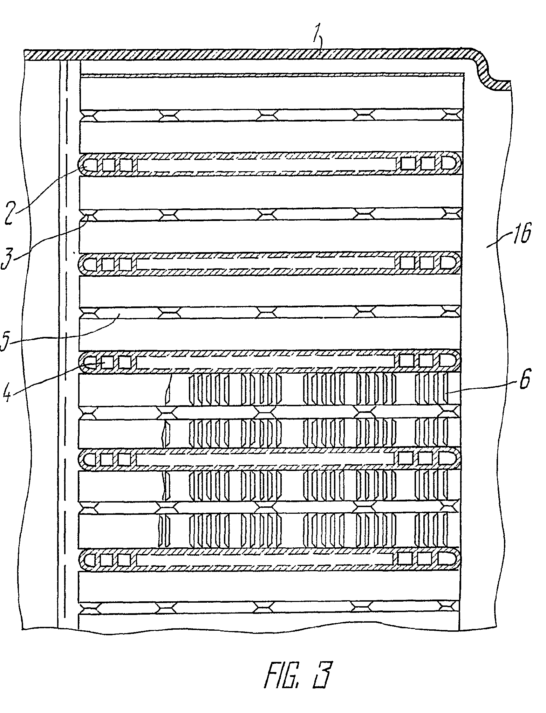

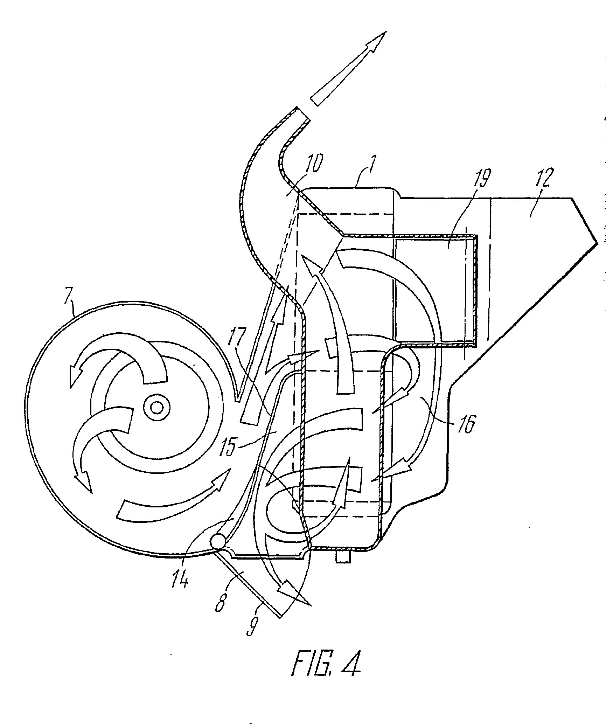

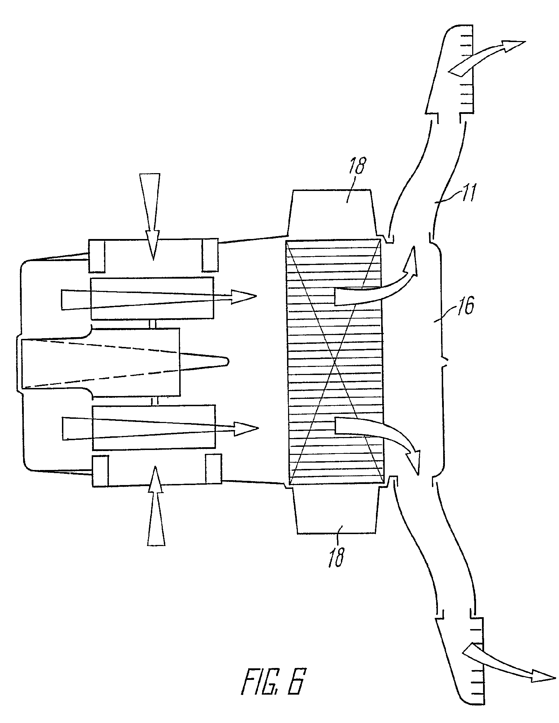

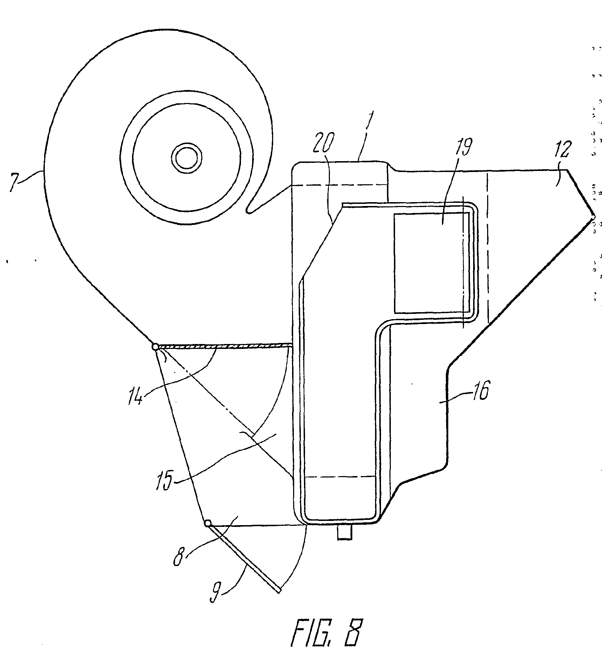

Zwischen dem elektrischen Ventilator 7 und dem Paket der Wärmeaustauschplatten befindet sich eine zusätzliche steuerbare Klappe 14 der Heissluftleitung 8 (Fig. 4,8). Die zusätzliche steuerbare Klappe 14 ist zwischen zwei Stellungen bewegbar, in deren erster sie einen Teil der Oberfläche des Pakets der Wärmeaustauschplatten überdeckt und mit dem überdeckten Teil des Pakets und dem Gehäuse 1 einen mit der Luftleitung 8 in Verbindung stehenden vorderen Hohlraum 15 bildet und in deren zweiter Stellung sie unter Überdeckung der Heissluftleitung 8 die gesamte Oberfläche des Pakets der Wärmeaustauschplatten freigibt (Fig. 2). Hinter dem Paket der Wärmeaustauschplatten ist im Gehause 1 ein hinterer Hohlraum 16 vorhanden, der mit der Luftleitung 12 für gekühlte Luft bei geöffneter Stellung ihrer Klappe 13 in Verbindung steht. Bei geschlossener Stellung der Klappe 13 verbindet sich der hintere Hohlraum 16 mit der Heissluftleitung 8.

Die bauliche Gestaltung des Klimageräts beschränkt sich nicht auf das beschriebene Ausführungsbeispiel.

Im besonderen können die Wärmeaustauschplatten des Verdampfers 2 in Form von Windungen eines U-förmigen Profils ausgebildet werden, deren Zu- und Ableitungen entsprechend parallel verbunden sind.

Die in den Zeichnungen gezeigten Einsatzstücke 6 sind als Wellbänder mit Jalousie gestaltet, doch ist auch eine andere Ausführung möglich.

Die zusätzliche steuerbare Klappe 14 kann auch verschiedenartige Ausführungen haben.

Im besonderen kann die Oberfläche der Klappe 14 (Fig. 8) ausreichend gross sein, um einen Teil des Pakets der Wärmeaustauschplatten überdecken zu können, doch ist eine Ausführungsvariante möglich, bei der die Oberfläche der Klappe 14 zum Überdecken eines Teils des Pakets der Wärmeaustauschplatten nicht hinreichend gross ist. In diesem Fall befestigt man starr im Gehäuse 1 einen Schild 17, der gemeinsam mit der Klappe 14 den erforderlichen Teil des Plattenpakets überdeckt (Fig. 2,4).

Die zusätzliche Klappe 14 kann aus einem Wärmedämmstoff hergestellt oder mit diesem überzogen werden, um die Wärmezuflüsse von der geförderten Luft zu der vorgewärmten Luft auszuschliessen.

An jedem der Stirnenden des Gehäuses 1 ist eine zusätzliche Luftleitung 18 mit seitlichem Abzweig ausgeführt, deren Innenraum innerhalb des Gehäuses 1 durch die Stirnfläche des Plattenpakets und eine steuerbare Klappe 19 begrenzt ist, wobei die steuerbare Klappe 19 den seitlichen Abzweig überdeckt und die Verbindung der zusätzlichen Luftleitung 18 mit dem hinteren Hohlraum 16 gewährleistet.

Mit der Heissluftleitung 8 stehen die zusätzlichen Luftleitungen 18 in ständiger Verbindung, ebenso wie mit den Spülluftleitungen 10 für die Windschutzscheibe, zu welchem Zweck in Oberteilen der Luftleitungen 10 Fenster 20 vorgesehen sind.

Die Wirkungsweise des Klimageräts ist die folgende.

Im Luftkühlungsbetrieb fördert der elektrische Ventilator 7 die Umlauftluft auf die gesamte Oberfläche des Pakets der Wärmeaustauschplatten.

Dabei wird in den Kanälen 4 des Verdampfers 2 ein Kühlmittel im Kreislauf geführt.

Infolge der Phasenumwandlung des Kühlmittels aus Flüssigkeit in Dampf, welche Umwandlung mit der Wärmeentnahme aus der über die Einsatzstücke 6 mit entwickelter Oberfläche durchzublasenden Luft begleitet wird, kühlt sich die letztere ab und tritt über die Luftleitung 12 in die Fahrerkabine (den Fahrgastraum) des Fahrzeuges ein. Dabei ist die Luftleitung 8 durch die zusätzliche Klappe 14 überdeckt, während die Luftleitungen 18 durch ihre Klappen 19 überdeckt sind.

Die gekühlte Luft hat also die Möglichkeit, aus dem hinteren Hohlraum 16 des Klimageräts nur über die Luftleitung 12 auszuströmen.

Beim Öffnen der Klappen 19 der Luftleitungen 18 wird die gekühlte Luft in die letzteren eintreten, und da die

_uftleitungen 18 über die Fenster 20 ständig mit den Spülluftleitungen 10 für die Windschutzscheibe und mit der
Heissluftleitung 8 verbunden sind, so strömt die gekühlte Luft über die gesamten Auslassluftleitungen des Klimageräts, so dass sich in der Fahrerkabine (im Fahrgastraum)
des Fahrzeuges normale Arbeitsbedingungen schnell einstellen.

Im Lufterwärmungsbetrieb fördert der elektrische Ventilator 7 die Aussenluft auf das Paket der Warmeaustauschplatten. Dabei wird in den Kanälen 5 des Erhitzers 3 die
Motorkühlflüssigkeit im Kreislauf geführt.

Bei der Zuführung der Luft auf die gesamte Oberfläche
des Pakets der Wärmeaustauschplatten, wenn die steuerbaren
Klappen 14,9 die Heissluftleitung 8 überdecken, tritt die
vorerwärmte Luft nur in die Luftleitungen 11 ein, wenn die
zusätzlichen Luftleitungen 18 durch die Klappen 19 und
die Luftleitung 12 durch die Klappe 13 überdeckt sind.

Wenn die Klappen 19 der Luftleitungen 18 geöffnet und
die Klappe 13 der Luftleitung 12 geschlossen sind, tritt
die vorerwärmte Luft aus dem hinteren Hohlraum 16 in die
Spülluftleitungen 11 für die Seitenscheiben sowie in die
Luftleitungen 18 und aus diesen über die Fenster 20 in
die Spülluftleitungen 10 für die Windschutzscheibe und
in die Luftleitung 8 bei geöffneter Klappe ein. Dabei wird
aufgrund der Überdeckung der aus den Luftleitungen 10 austretenden Luftströme die Windschutzscheibe besser bespült.

Beim Überdecken eines Teils des Pakets der Wärmeaustauschplatten durch die zusätzliche Klappe 14 strömt die
vom elektrischen Ventilator 7 geförderte Luft in den hinteren Hohlraum 16 des Gehauses 1 ein. Da die Luftleitung
12 durch die Klappe 13 und die Luftleitungen 18 durch die
Klappen 19 überdeckt sind, hat die vorerwärmte Luft nur
eine Möglichkeit, und zwar sich um 180° zu wenden, durch
den zweiten Teil des Pakets der Wärmeaustauschplatten hindurch zu strömen und in den vorderen Hohlraum 15 hinauszutreten. Aus dem letzteren tritt die Luft in die Luftleitung 8 und in die Luftleitungen 18 und über die Fenster 20 in die Spülluftleitungen 10 für die Windschutzscheibe ein. Die Luftleitungen 11 können nach Wunsch geöffnet oder geschlossen sein.

Die erfindungsgemass vorgeschlagene Konstruktion des Klimageräts erweitert also die Möglichkeiten der Steuerung der Luftströme in der Fahrerkabine (im Fahrgastraum) eines Fahrzeuges und verbessert somit die Arbeitsbedingungen für den Fahrer.

Die Erfindung beschränkt sich nicht auf das obenbeschriebene Ausführungsbeispiel und lässt weitere Ausführungsvarianten im Rahmen des Beschreibungsinhalts zu.

Gewerbliche Verwertbarkeit

Die Erfindung kann in selbstfahrenden Transportmitteln, die ein Flüssigkeitskühlsystem des Motors haben, insbesondere in Kraftwagen, Strassenbaumaschinen, in der Landtechnik verwendet werden.

PATENTANSPRÜCHE:

1. Klimagerät eines Fahrzeuges, enthaltend ein Gehäuse (1) in dem ein Verdampfer (2) und ein Erhitzer (3) untergebracht sind, die mit einem Verdichter bzw. dem Kühlsystem des Fahrzeugmotors verbunden sind, sowie einen Ventilator (7) und in Luftleitungen für Heissluft und gekühlte Luft eingebaute steuerbare Klappen (9, 13), dadurch g e k e n n z e i c h n e t, dass der Verdampfer (2) und der Erhitzer (3) als Paket von sich abwechselnden und Durchgangskanäle (4,5) für einen Wärmeträger aufweisenden Wärmeaustauschplatten ausgebildet sind und der Ventilator (7) vor dem Paket der Wärmeaustauschplatten längs des Luftstromes angeordnet ist, wobei zwischen dem Ventilator (7) und dem Paket der Wärmeaustauschplatten eine zusätzliche steuerbare Klappe (14) der Heissluftleitung (8) angeordnet ist, die zwischen zwei Stellungen bewegbar ist, in deren erster sie einen Teil der Oberfläche des Pakets der Wärmeaustauschplatten überdeckt und mit dem überdeckten Teil des Plattenpakets und dem Gehäuse (1) einen mit der Heissluftleitung (8) in Verbindung stehenden vorderen Hohlraum (15) bildet und in deren zweiter Stellung sie unter Überdeckung der Heissluftleitung (8) die gesamte Oberfläche des Pakets der Wärmeaustauschplatten freigibt, und hinter dem Paket der Wärmeaustauschplatten im Gehäuse (1) ein hinterer Hohlraum (16) vorhanden ist, der mit der Luftleitung (12) für gekühlte Luft bei geöffneter Stellung ihrer Klappe (13) und mit der Heissluftleitung (8) bei geschlossener Stellung der Klappe (13) .in Verbindung steht.

2. Klimagerät nach Anspruch 1, dadurch g e k e n n z e i c h n e t, dass die Verbindung des hinteren Hohlraumes (16) mit dem vorderen Hohlraum (15) durch zusätzliche Luftleitungen (18) erfolgt, die zwischen jeder der zusätzlichen Luftleitungen (18) und dem hinteren Hohlraum (16) angeordnete steuerbare Klappen (19) aufweisen, wobei die zusätzlichen Luftleitungen (18) mit der Heissluftleitung (8) und der Spülluftleitung (10) für die Windschutzscheibe des Fahrzeuges stets verbunden sind.

FIG.1

FIG. 2

FIG. 3

FIG. 4

*FIG. 5*

18

11

18

16

FIG. 6

FIG. 7

FIG. 8

# INTERNATIONAL SEARCH REPORT

International Application No PCT/SU 89/00034

## I. CLASSIFICATION OF SUBJECT MATTER (if several classification symbols apply, indicate all) *

According to international Patent Classification (IPC) or to both National Classification and IPC

IPC$^4$ - B 60 H 3/00

## II. FIELDS SEARCHED

### Minimum Documentation Searched [7]

| Classification System | Classification Symbols |
|---|---|
| IPC$^4$ | B 60 H 1/00, 3/00 |

### Documentation Searched other than Minimum Documentation to the Extent that such Documents are included in the Fields Searched *

## III. DOCUMENTS CONSIDERED TO BE RELEVANT *

| Category * | Citation of Document, [11] with indication, where appropriate, of the relevant passages [12] | Relevant to Claim No. [13] |
|---|---|---|
| A | SU,A1,1144899 (Azovo-chernomorsky institut mekhanizatsii selskogo khozyaistva et al.) 15 March 1985 (15.03.85), see the claims, figures 1-3 | 1 |
| A | GB,B,1286811 (SMITES INDUSTRIES LIMITED), 23 August 1972 (23.08.72), see claims 1-3, figures 1-3 | 1 |
| A | FR,A1,2362019 (BAYERISCHE MOTOREN WERKE AKTIENGESELLSCHAFT), 17 March 1978 (17.03.78), see claims 1,2 figures 1,2 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 24 May 1989 (24.05.89) | 12 June 1989 (12.06.89) |
| International Searching Authority<br>ISA/SU | Signature of Authorized Officer |

Form PCT/ISA/210 (second sheet) (January 1985)